# EUROPÄISCHE PATENTANMELDUNG

(11) **EP 4 404 013 A1**
(43) Veröffentlichungstag der Anmeldung: **24.07.2024**
(21) Anmeldenummer: 23152910.8
(22) Anmeldetag: 23.01.2023
(51) Int. Cl.: G05B 21/02

(54) **ANALYSE VON BEWEGUNGSABLÄUFEN AN EINER ACHSE**

(71) Anmelder: Siemens Aktiengesellschaft, 80333 München (DE)
(72) Erfinder: Frank, Edgar, 90482 Nürnberg (DE); Jartyn, Hermann, 91338 Igensdorf (DE); Leuschner, Jenny, 91058 Erlangen (DE); Schirner, Uwe, 91330 Eggolsheim (DE)
(74) Vertreter: Siemens Patent Attorneys

(57) **Zusammenfassung**

Verfahren zur Analyse von Bewegungsabläufen von Bewegungen mittels mindestens einer Achse, aufweisend die folgenden Schritte:
- Ermitteln einer Ereignisphase des Bewegungsablaufs durch eine Bewegungssteuerung zur Laufzeit,
- Ausgeben der Ereignisphase an eine Aufzeichnungskomponente,
- Aufzeichnen analoger Signale der Bewegung an oder mittels zumindest einer der mindestens einen Achse mit einer an die Ereignisphase angepassten Frequenz durch die Aufzeichnungskomponente abhängig von der ausgegebenen Ereignisphase,
- Bereitstellen der aufgezeichneten analogen Signale zur Analyse der Bewegung.

## Beschreibung

Die Erfindung betrifft ein Verfahren zur Analyse von Bewegungsabläufen an mindestens einer Achse sowie eine zugehörige Analysekomponente und Bewegungssteuerung mit Analysekomponente.

Automatisierungslösungen für Motion-Control Anwendungen betreffen Systeme oder Maschinen, bei denen Bewegungsaufgaben umgesetzt werden. Solche Lösungen werden oft komplex, weil viele Hardware-Komponenten wie Motoren, Antriebe und Steuerungen, insbesondere PLCs, benötigt werden. Entsprechend wird auch die dazugehörige Software, die auf der PLC läuft, also das Automatisierungsprogramm, umfangreich. Es ist bekannt, im Automatisierungsprogramm sogenannte Technologische Objekte (kurz TOs) vorzusehen, die jeweils ein Hardware-Objekt in der Steuerung repräsentieren. Diese Technologischen Objekte werden genutzt, um Funktionen oder Befehle im Automatisierungsprogramm direkt dem Hardware-Objekt zuordnen zu können. Dadurch wird eine Programmierung oder Konfiguration für den Nutzer erleichtert.

Bei der Programmierung und Inbetriebnahme von Automatisierungslösungen werden zur Analyse von Fehlersituationen und zur Überprüfung des korrekten Ablaufs häufig Aufzeichnungen der Zustände der Technologischen Objekte und anderer Programmvariablen verwendet. Diese Aufzeichnungen werden in der PLC durchgeführt und in regelmäßigen Abständen werden die betreffenden Werte gespeichert. Für diese Aufzeichnung wird viel Speicherplatz benötigt.

Zur Reduzierung des Speicherbedarfs ist es bekannt eine Untersetzung zu verwenden. Das bedeutet, dass die betreffenden Werte nicht mehr im Applikationstakt aufgezeichnet werden, sondern alle gleichermaßen nur noch jeden n-ten Takt. Hierbei geht aber auch Genauigkeit verloren, weil dann möglicherweise manche Signaländerungen nicht erkannt werden.

Ferner ist es bekannt, eine Auswertung aufgezeichneter Werte zu unterstützen, indem man die Daten nachträglich filtert und Abschnitte, bei denen sich die Werte nicht ändern oder z.B. nur linear ändern, erkennt.

Vor diesem Hintergrund ist es eine Aufgabe der vorliegenden Erfindung eine verfeinerte und gleichzeitig effiziente Analyse von Bewegungsabläufen zu ermöglichen. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zur Analyse von Bewegungsabläufen von Bewegungen mittels mindestens einer Achse, aufweisend die folgenden Schritte:
- Ermitteln einer Ereignisphase des Bewegungsablaufs durch eine Bewegungssteuerung zur Laufzeit,
- Ausgeben der Ereignisphase an eine Aufzeichnungskomponente,
- Aufzeichnen analoger Signale der Bewegung an oder mittels zumindest einer der mindestens einen Achse mit einer an die Ereignisphase angepassten Frequenz durch die Aufzeichnungskomponente abhängig von der ausgegebenen Ereignisphase,
- Bereitstellen der aufgezeichneten analogen Signale zur Analyse der Bewegung.

Analysiert werden beispielsweise Bewegungsabläufe, die durch Bewegungen einer Achse oder mehrerer Achsen im Zusammenspiel bewirkt werden. Beispielsweise führt eine Kinematik oder ein Greifarm eines Roboters oder ein Werkzeug eine Bewegung aus, um ein Objekt, wie ein Produkt oder eine Produktkomponente oder ein Werkstück, zu Zwecken des Transfers, der Bearbeitung oder der Verpackung zu bewegen. Für die Bewegungsabläufe werden vorteilhafterweise Ereignisphasen ermitteln, und zwar durch die Bewegungssteuerung. Die Ereignisphasen entsprechen Abschnitten der Bewegung, in welchen ein Ereignis innerhalb des Bewegungsablaufs mit einer bestimmten Dauer und einem bestimmten Muster auftritt, beispielsweise ein Ereignis "Beschleunigung", "Konstantfahrt" oder "Verzögerung". Verschiedene Ereignisphasen werden beispielsweise fest für eine mit der Bewegungssteuerung bewegte Maschine definiert. Alternativ werden Ereignisphasen während des Betriebs einer Maschine erkannt aufgrund von sich wiederholenden Mustern oder bei sich wiederholenden Steuerungsbefehlen, insbesondere unterstützt durch Machine Learning Verfahren. Beispielsweise werden Ereignisphasen direkt aus für ein reales Objekt, insbesondere eine Achse, abgesetzten Positionierbefehlen abgeleitet. Insbesondere sind aus dem Positionierbefehl eine Dauer von Beschleunigungsphasen und Konstantfahrtphasen ableitbar.

Beispielsweise dauert ein Vorgang wie eine Achsbewegung von einigen Sekunden bis hin zu einigen Minuten und es sind häufig vor allem die Werte zu Beginn und am Ende des Bewegungsablaufs für eine Aufzeichnung und Analyse von Bedeutung, da hier in der Regel Beschleunigungen an einer oder mehreren Achsen erfolgen und dann erhöhte Gefahr von Fehlern, Kollisionen, u.ä. besteht.

Die ermittelte Ereignisphase wird an die Aufzeichnungskomponente gegeben, welche dann abhängig von der Ereignisphase die Frequenz anpasst, mit der aufgezeichnet wird. Aufgezeichnet werden analoge Signale der Bewegung, insbesondere eine Position, Geschwindigkeit oder Beschleunigung einer Achse oder einer Trajektorie im Raum über der Zeit. Die Aufzeichnungskomponente wird auch als Trace-Komponente bezeichnet, die aufgezeichneten Werte werden oftmals als Trace bezeichnet. Mit dem vorgeschlagenen Verfahren erfolgt eine Aufzeichnung der analogen Signale zu Zwecken des Tracings bei einem typischen oder durchschnittlichen Bewegungsverlauf mit Beschleunigungen und Verzögerungen sowie mit Abschnitten mit konstanter Geschwindigkeit der Bewegung auf vorteilhafte Weise nicht mit fixer Frequenz, sondern mit einer an die Ereignisphasen angepassten Frequenz. Somit reduziert sich die Menge der aufgezeichneten Daten bei einer angepassten niedrigeren Frequenz. Typischerweise werden die aufgezeichneten Daten von einer Steuerung bereitgestellt, indem sie zu einem System übertragen werden, auf dem die Aufzeichnung ausgewertet wird, beispielsweise ein Engineering-System oder ein HMI. Für eine solche Übertragung wird entsprechend aufgrund der angepassten Datenmenge nicht unnötig viel Zeit benötigt. Zugleich wird die Auswertung der aufgezeichneten Daten erleichtert, da ein Programmierer oder Inbetriebnehmer lediglich die relevanten Werte verarbeiten oder auswerten muss. Insbesondere entfällt ein bislang notwendiges manuelles Überspringen von nicht benötigten Werten. Zudem sind die benötigten Speicherplatzmengen durch das vorgeschlagene Verfahren wegen der reduzierten Tracedatenmenge geringer.

Mit aufgezeichnet werden zusätzlich zu den analogen Signalen vorteilhaft auch Funktionsaufrufe an Objekten oder Achsen oder Fehlermeldungen. Für eine Analyse werden diese vorteilhafterweise mit den aufgezeichneten analogen Signalen gemeinsam bereitgestellt und insbesondere graphisch in einem gemeinsamen Diagramm dargestellt.

Gemäß einer Ausgestaltung wird die Ereignisphase des Bewegungsablaufs anhand von Steuerungssignalen, welche in einem Automatisierungsprogramm für mindestens eine durch die Bewegungssteuerung anzusteuernde Achse ausgegeben werden, ermittelt. Beispielsweise werden vorteilhafterweise die analogen Signale als Trace je Achse aufgezeichnet. Die relevanten Trace-Werte ergeben sich direkt aus den Steuerungssignalen, die je Achse ausgegeben werden. Weist das Bewegungsmuster beispielsweise an einer Achse keine positive oder negative Beschleunigung auf, so dient dies vorteilhafterweise als Trigger für die Aufzeichnung der zugehörigen aufzuzeichnenden analogen Signale mit einer reduzierten Frequenz. Somit kann auf besonders einfache Weise der Datenumfang der aufgezeichneten Werte je Achse angepasst und bei typischen Achsbewegungen mit Bewegungsabschnitten mit konstanter Geschwindigkeit reduziert werden.

Gemäß einer Ausgestaltung wird die Ereignisphase anhand des die Bewegung verursachenden Bewegungsprogramms unabhängig von einzelnen Achsbewegungen ermittelt. Beispielsweise werden bei Bewegungsmustern, die durch eine Kinematik verursacht werden und die dann durch eine Trajektorie eines Objekts im Raum beschrieben werden, diejenigen Abschnitte mit einer angepassten, insbesondere niedrigeren, Frequenz aufgezeichnet, bei denen die Trajektorie eine Bewegung mit konstanter Geschwindigkeit beschreibt. So benötigen Tracedaten, die die Trajektorie betreffen, weniger Speicherplatz und eine Auswertung wird entsprechend vereinfacht.

Gemäß einer Ausgestaltung wird die Ereignisphase abhängig von einer Beschleunigung der Bewegung ermittelt. Beispielsweise wird beim Ermitteln der Ereignisphase zwischen einem mit maximaler und mit reduzierter Frequenz aufzuzeichnenden Ereignis unterschieden. Mit maximaler Frequenz aufzuzeichnende Ereignisphasen liegen vor, wenn eine Beschleunigung ungleich null ist. Bei Beschleunigung gleich null oder konstanter Geschwindigkeit wird eine mit reduzierter Frequenz aufzuzeichnende Ereignisphase erkannt. Ferner wird beispielsweise zwischen Ereignisphasen mit einer positiven und Ereignisphasen mit einer negativen Beschleunigung unterschieden. Alternativ kann zwischen Ereignisphasen mit spezifischen Beschleunigungsmustern unterschieden werden und davon abhängig die Frequenz der Datenaufzeichnung angepasst werden. Beispielsweise werden Start oder Stop-Bewegungen, Übergabe-Bewegungen während kollaborativen Mensch-Maschine- oder Maschine-Maschine-Arbeitsschritten, Umlagerungs-Bewegungen bei Transport- oder Transfer-Vorgängen oder Bewegungsmuster während verarbeitenden Prozessen oder ein aufgetretener Fehler als Ereignisse ermittelt. Beispielsweise sollen ausschließlich Bewegungen solcher Ereignisphasen mit maximaler oder voreingestellter Frequenz aufgezeichnet werden und alle anderen Phasen, unabhängig von auftretenden Beschleunigungen, sollen lediglich mit niedriger Frequenz aufgezeichnet werden. Wie gering die Frequenz ist, kann beispielsweise vorgegeben werden oder ist je Achse oder je Bewegungsautomat festgelegt.

Gemäß einer Ausgestaltung erfolgt bei einer Ereignisphase, die einer positiven oder negativen Beschleunigung entspricht, ein Aufzeichnen mit einer höheren Frequenz als bei einer Ereignisphase, die einer Beschleunigung von null entspricht. Beispielsweise werden die Ereignisphasen mit einer Beschleunigung als die einzig für eine Analyse interessierenden angesehen und entsprechend erfolgt nur hier eine Aufzeichnung mit hoher Frequenz. Bei konstanter Geschwindigkeit oder einer Beschleunigung von null wird angenommen, dass eine Analyse auch auf Basis analoger Signale mit niedriger Datendichte ausreichend ist. Beispielsweise werden hier weniger Kollisionen oder sonstige Fehler erwartet, so dass eine Abtastung der Werte mit relativ niedriger Frequenz ausreicht.

Gemäß einer Ausgestaltung ist die Ereignisphase in einem die Bewegung verursachenden Bewegungsprogramm einer Repräsentation eines realen Objekts, insbesondere einer Achse oder einer Kinematik, zugeordnet. Beispielsweise wird für jede Repräsentation eines realen Objekts eines Bewegungsautomaten eine jeweilige Ereignisphase und insbesondere eine Abfolge von Ereignisphasen über der Zeit ermittelt. Repräsentationen von realen Objekten sind auch als Technologische Objekte bekannt. Vorteilhafterweise wird eine Aufzeichnung der analogen Signale je Technologischem Objekt vorgenommen und separat gekennzeichnet oder gespeichert. So können Auswertungen je Technologischem Objekt, also beispielsweise je einzelner Achse, zielgenau erfolgen. Aufzeichnungen unterschiedlicher Technologischer Objekte können ferner beispielsweise in der grafischen Darstellung übereinandergelegt werden, um eine Fehleranalyse zusammenwirkender Bewegungsachsen vorzunehmen.

Gemäß einer Ausgestaltung werden ausschließlich analoge Signale des zur ermittelten Ereignisphase zugehörigen realen Objekts bei einer Ereignisphase, die einer positiven oder negativen Beschleunigung entspricht, mit einer höheren Frequenz aufgezeichnet als bei einer Ereignisphase, die einer Beschleunigung von null entspricht. Somit werden auf besonders vorteilhafte Weise nicht unnötig viele Daten aufgezeichnet, übermittelt und gespeichert, weil sowohl die zeitlichen Phasen, während derer eine Aufzeichnung mit hoher Abtastrate erfolgt, reduziert werden, als auch die Aufzeichnung auf die zu einem jeweiligen Zeitpunkt oder während eines jeweiligen Phase interessierenden Objekte, insbesondere Achsen, beschränkt wird. Gleichzeitig liegen die interessierenden Bewegungsverläufe in hoher Abtastrate vor. Zur Verfügung stehender Speicherplatz wird so besonders effizient für die am meisten interessierenden Bewegungs-Signale genutzt.

Gemäß einer Ausgestaltung erfolgt eine graphische Darstellung der aufgezeichneten analogen Signale in einer Analysekomponente. Tracedaten werden besonders vorteilhaft visualisiert, um eine Analyse vornehmen zu können. Beispielsweise werden so Unregelmäßigkeiten oder unerwartete Bewegungsabläufe für einen Nutzer intuitiv erfassbar. Insbesondere ist die graphische Darstellung zu beliebigen Zeitpunkten nach der Aufzeichnung auf einem Bildschirm anzeigbar. Beispielsweise wird die Aufzeichnungskomponente mit einem zugehörigen Speicher für die Tracedaten an einen Industrie-PC angeschlossen und an dessen Bildschirm angezeigt.

Gemäß einer Ausgestaltung werden Zeitabschnitte, in welchen die aufgezeichneten Signale mit niedrigerer Frequenz aufgezeichnet wurden, mit interpolierten Werten dargestellt. Beispielsweise werden interpolierte Werte in der höchsten Frequenz, mit der Werte aufgezeichnet wurden, berechnet und dargestellt. Somit wird auf vorteilhafte Weise Speicherplatz eingespart und zugleich erscheint eine Darstellung in der für den Nutzer gewohnten Weise mit gleichmäßiger Datenrate.

Gemäß einer Ausgestaltung werden Zeitabschnitte, in welchen die aufgezeichneten Signale mit niedrigerer Frequenz aufgezeichnet wurden, ausgeblendet. Somit wird einerseits bereits der Speicherplatz für das Aufzeichnen nicht benötigter Daten eingespart, zugleich wird auch die Darstellung auf das notwendige Minimum reduziert. Somit kann sich der Nutzer vorteilhaft auf die interessierenden Zeitbereiche und die dort mit der gewünscht hohen Frequenz aufgezeichneten Werte konzentrieren.

Die Erfindung betrifft ferner eine Aufzeichnungskomponente zum Analysieren von Bewegungsabläufen von Bewegungen mittels mindestens einer Achse, ausgestaltet zum:
- Empfangen einer durch eine Bewegungssteuerung zur Laufzeit ermittelten Ereignisphase des Bewegungsablaufs,
- Aufzeichnen analoger Signale der Bewegung an oder mittels zumindest einer der mindestens einen Achse mit einer an die Ereignisphase angepassten Frequenz abhängig von den ausgegebenen Ereignisphasen
- Bereitstellen der aufgezeichneten analogen Signale zur Analyse der Bewegung.

Gemäß einer Ausgestaltung weist die Aufzeichnungskomponente ferner eine Analysekomponente mit einer Darstellungskomponente zur graphischen Darstellung der aufgezeichneten analogen Signale auf.

Die Erfindung betrifft ferner eine Bewegungssteuerung mit einer Aufzeichnungskomponente nach einem der obigen Ausgestaltungen.

Die Komponenten können hardwaretechnisch und/oder auch softwaretechnisch implementiert sein. Bei einer hardwaretechnischen Implementierung kann die jeweilige Komponente als Vorrichtung oder als Teil einer Vorrichtung, zum Beispiel als Computer oder als Prozessor oder als Mikroprozessor ausgebildet sein. Unter einem Prozessor ist eine elektronische Schaltung zur computerbasierten Datenverarbeitung zu verstehen, beispielsweise eine CPU. Es kann sich um die CPU eines Computers handeln oder um einen Mikroprozessor eines Mikrochips.

Bei einer softwaretechnischen Implementierung kann die jeweilige Komponente als Computerprogramm, als eine Funktion, als eine Routine, als Teil eines Programmcodes oder als ausführbares Objekt ausgebildet sein.

Die Erfindung betrifft ferner ein Computerprogramm, umfassend Befehle, die bei der Ausführung des Programms durch einen Computer diesen veranlassen, das Verfahren nach einem der oben beschriebenen Verfahrensvarianten auszuführen.

Ein Computerprogramm kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm erfolgen.

Die Erfindung wird nachfolgend anhand von Ausführungsbeispielen mit Hilfe der Figuren näher erläutert. Es zeigen:
- Figur 1: eine schematische Darstellung zur Veranschaulichung des Verfahrens zur Analyse von Bewegungsabläufen gemäß einem ersten Ausführungsbeispiel der Erfindung;
- Figur 2: eine schematische Darstellung einer Visualisierung von aufgezeichneten Daten gemäß dem ersten Ausführungsbeispiel der Erfindung;
- Figur 3: eine schematische Darstellung einer Visualisierung von aufgezeichneten Daten gemäß einem zweiten Ausführungsbeispiel der Erfindung;
- Figur 4: eine schematische Darstellung zur Veranschaulichung der Analysekomponente gemäß einem dritten Ausführungsbeispiel.

In den Figuren sind funktionsgleiche Elemente mit denselben Bezugszeichen versehen, sofern nichts anderes angegeben ist.

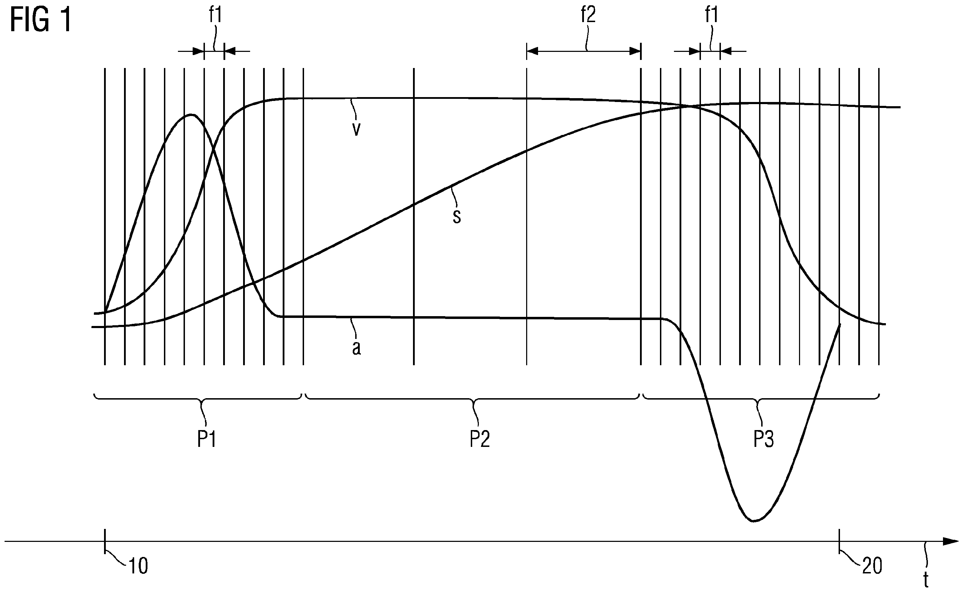

In Figur 1 sind idealisiert drei Kurven analoger Signale dargestellt, wie sie bei einer Bewegung an einer Achse erwartet werden können. Beispielsweise wird die Bewegung eines Bewegungsautomaten überwacht, der zu Zwecken der Positionierung ein Objekt mittels einer Achse an eine bestimmte Position verfährt, in welcher dann das Objekt bearbeitet wird. Beispielsweise wird eine Flasche mit einer Flüssigkeit befüllt. Dargestellt sind in Figur 1 die drei Kurven der Position s, der Geschindigkeit v sowie der Beschleunigung a, alle aufgetragen über der Zeit t. Zur Veranschaulichung ist auf der horizontalen Achse, die die Zeit t angibt, eingetragen, zu welchem Startzeitpunkt 10 ein Positionierbefehl für die Achse ausgegeben wird und zu welchem Endzeitpunkt 20 dieser beendet ist. Während die Achse die durch den Positionierbefehl vorgegebene Bewegung durchläuft, werden verschiedene Ereignisphasen erkannt: eine Beschleunigungsphase P1, eine Konstantfahrt-Phase P2 und eine Verzögerungsphase P3. Während der zwei Phasen mit positiver und negativer Beschleunigung a, nämlich der Beschleunigungsphase P1 und der Verzögerungsphase P3, erfolgt eine Aufzeichnung von Sollwerten der Position s, Geschwindigkeit v und Beschleunigung a. Diese Sollwerte werden von einem sogenannten Interpolator mit einer Abtastfrequenz f1 ausgegeben. Bei der Frequenz f1 handelt es sich somit um die höchstmögliche Frequenz, in der Soll-Werte verfügbar sind. Sobald gemäß einem ersten Ausführungsbeispiel der Erfindung durch die Aufzeichnungskomponente die Konstantfahrt-Phase P2 erkannt wird, beginnt die Aufzeichnungskomponente die Aufzeichnung der Sollwerte mit einer reduzierten Frequenz f2. Erhält die Aufzeichnungskomponenten von der Bewegungssteuerung die Information, dass die Verzögerungsphase P3 beginnt erfolgt die Aufzeichnung wiederum mit der Frequenz f1.

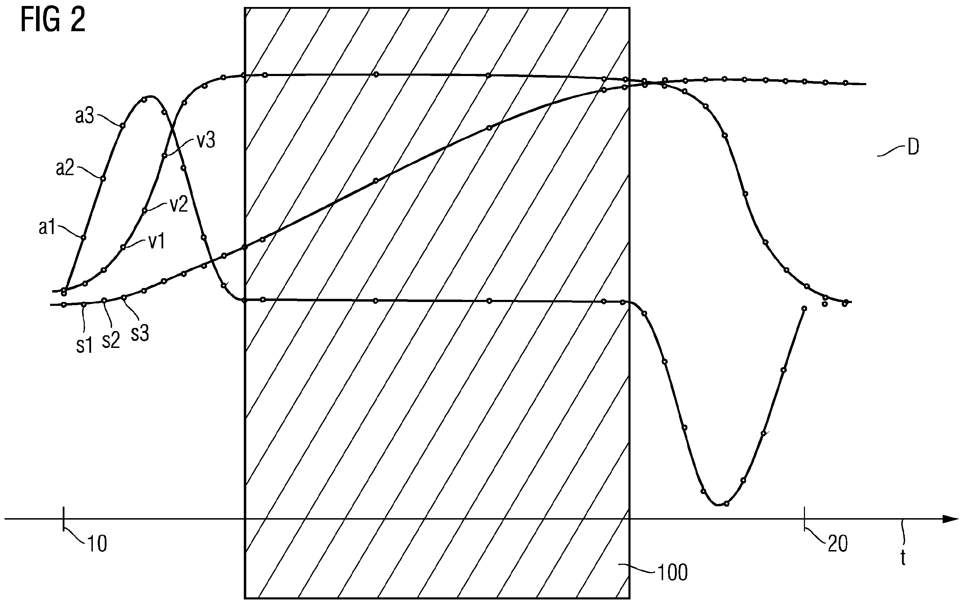

In Figur 2 ist dargestellt, wie eine Visualisierung aufgezeichneter Tracewerte erfolgt. Beispielsweise werden alle aufgezeichneten Werte s1, s2, s3..., v1, v2, v3..., a1, a2, a3... aller analogen Signale s, v, a in einem Zeitdiagramm als graphische Darstellung D aufgetragen. In Zeitabschnitten 100, in welchen eine Aufzeichnung mit niedrigerer Frequenz f2 erfolgt, wird zwischen den Aufzeichnungswerten interpoliert. Eine Interpolation kann ferner auch zwischen den übrigen Werten zur leichteren visuellen Erfassbarkeit vorgenommen werden.

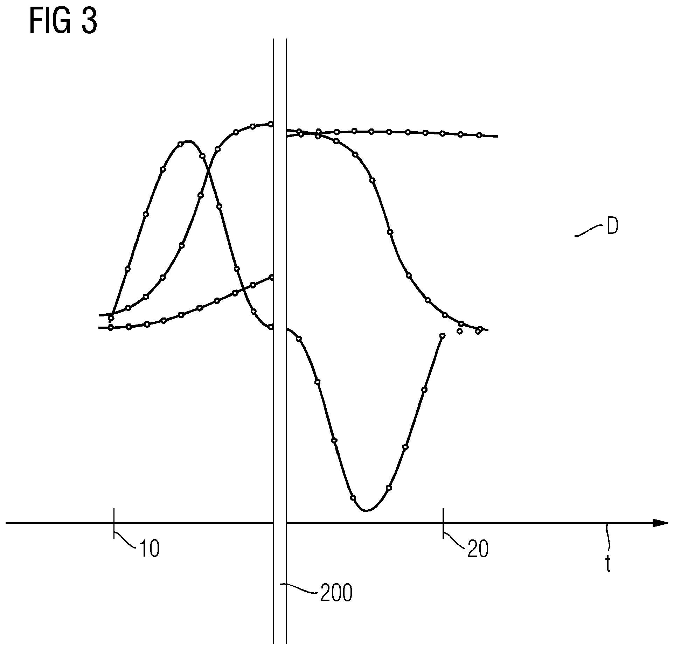

In Figur 3 ist gezeigt, wie gemäß einem zweiten Ausführungsbeispiel die graphische Darstellung D derart erfolgt, dass ein Zeitabschnitt 200, in dem Werte mit niedrigerer Frequenz f2 aufgezeichnet wurden, ausgeblendet wird. Die Ansicht ist somit auf das Wesentliche reduziert, sodass bei der Analyse der Daten, wie insbesondere einer Trace-basierten Fehlersuche, möglichst wenig unnötige Zeitabschnitte übersprungen oder durch Scrollen o.ä. verschoben werden müssen.

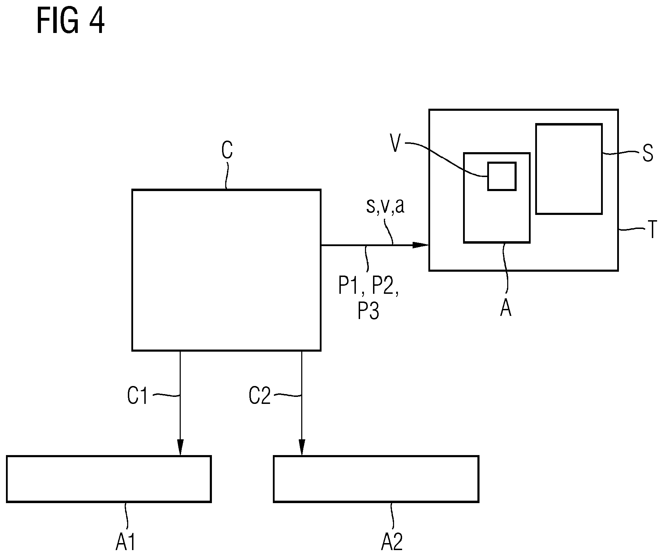

Figur 4 zeigt eine Aufzeichnungskomponente T gemäß einem dritten Ausführungsbeispiel der Erfindung. Die Aufzeichnungskomponente T ist mit der Bewegungssteuerung C kommunikativ verbunden, um neben den aufzuzeichnenden analogen Signalen s, v, a ferner die Informationen über die Ereignisphasen P1, P2, P3 zu erhalten. Die Aufzeichnungskomponente verfügt über eine Speicherkomponente S und eine Analysekomponente A. In der Speicherkomponente S werden die von der Aufzeichnungskomponente T aufgezeichneten Werte der analogen Signale s, v, a gespeichert. Diese werden an die Analysekomponente weitergeleitet und mittels einer Visualisierungseinrichtung V zur Anzeige gebracht. Beispielsweise verfügt die Visualisierungseinrichtung V über ein Display, auf dem Diagramme mit den aufgezeichneten Werten abgebildet werden und die bei einer Fehleranalyse unterstützend herangezogen werden.

Steuerungssignale C1, C2 werden von der Bewegungssteuerung C an die jeweiligen Achsen A1, A2 ausgegeben. Die Achsen A1, A2 bewirken eine jeweilige Achsbewegung, die durch ein Zusammenwirken der Achsen A1, A2 zu einer Objektbewegung führt. Beispielsweise treiben die Achsen eine fliegende Säge an und führen zu einer Bewegung des Messers entlang sowie quer zu einer Materialbahn. Die Einzelbewegungskurven der Achsen A1, A2 werden dann im Diagramm der Visualisierungseinrichtung V angezeigt. Beispielsweise werden je Achsbewegung ein Diagramm und die mehreren Diagramme übereinander angezeigt. Bei Applikationen wie der fliegenden Säge, bei denen Aufsynchronisierungsbewegungen erfolgen, ist eine Analyse von Bewegungsmustern zur Fehlererkennung besonders hilfreich. Gleichzeitig ist es aufgrund der Vielzahl von Beschleunigungs- und Verzögerungsvorgängen und der hohen Wiederholraten von besonderem Interesse, die Datenmengen der aufgezeichneten Signale gering zu halten. Mit dem vorgeschlagenen Verfahren einer an die Ereignisphase anpassbaren Aufzeichnungsfrequenz wird eine reduzierte Datenmenge aufgezeichnet und im Speicher S gespeichert und auch nur eine reduzierte Datenmenge muss durch die Analysekomponente A verarbeitet werden. Zudem ist auch die visuelle Anzeige in den Diagrammen auf das Wesentliche reduziert.

Obwohl die Erfindung im Detail durch die Ausführungsbeispiele näher illustriert und beschrieben wurde, so ist die Erfindung nicht durch die offenbarten Beispiele eingeschränkt und andere Variationen und Kombinationen können vom Fachmann hieraus abgeleitet werden, ohne den Schutzumfang der Erfindung zu verlassen.

## Patentansprüche

1. Verfahren zur Analyse von Bewegungsabläufen von Bewegungen mittels mindestens einer Achse (A1, A2), aufweisend die folgenden Schritte:
- Ermitteln einer Ereignisphase (P1, P2, P3) des Bewegungsablaufs durch eine Bewegungssteuerung (C) zur Laufzeit,
- Ausgeben der Ereignisphase (P1, P2, P3) an eine Aufzeichnungskomponente (T),
- Aufzeichnen analoger Signale (s, v, a) der Bewegung an oder mittels zumindest einer der mindestens einen Achse (A1) mit einer an die Ereignisphase (P1, P2, P3) angepassten Frequenz (f1, f2) durch die Aufzeichnungskomponente (T) abhängig von der ausgegebenen Ereignisphase (P1, P2, P3),
- Bereitstellen der aufgezeichneten analogen Signale zur Analyse der Bewegung.

2. Verfahren nach Anspruch 1, wobei die Ereignisphase (P1, P2, P3) des Bewegungsablaufs anhand von Steuerungssignalen (C1, C2), welche in einem Automatisierungsprogramm für mindestens eine durch die Bewegungssteuerung (C) anzusteuernde Achse (A1) ausgegeben werden, ermittelt wird.

3. Verfahren nach Anspruch 1, wobei die Ereignisphase (P1, P2, P3) anhand des die Bewegung verursachenden Bewegungsprogramms unabhängig von einzelnen Achsbewegungen ermittelt wird.

4. Verfahren nach einem der vorstehenden Ansprüche, wobei die Ereignisphase (P1, P2, P3) abhängig von einer Beschleunigung der Bewegung ermittelt wird.

5. Verfahren nach einem der vorstehenden Ansprüche, wobei bei einer Ereignisphase (P1, P2, P3), die einer positiven oder negativen Beschleunigung entspricht, ein Aufzeichnen mit einer höheren Frequenz (f1) erfolgt als bei einer Ereignisphase (P1, P2, P3), die einer Beschleunigung von null entspricht.

6. Verfahren nach einem der vorstehenden Ansprüche, wobei die Ereignisphase (P1, P2, P3) in einem die Bewegung verursachenden Bewegungsprogramm einer Repräsentation (TO) eines realen Objekts, insbesondere einer Achse oder einer Kinematik, zugeordnet ist.

7. Verfahren nach einem der vorstehenden Ansprüche, wobei ausschließlich analoge Signale des zur ermittelten Ereignisphase (P1, P2, P3) zugehörigen realen Objekts bei einer Ereignisphase (P1, P2, P3), die einer positiven oder negativen Beschleunigung entspricht, mit einer höheren Frequenz (f1) aufgezeichnet werden als bei einer Ereignisphase (P1, P2, P3), die einer Beschleunigung von null entspricht.

8. Verfahren nach einem der vorstehenden Ansprüche, wobei eine graphische Darstellung (D) der aufgezeichneten analogen Signale (s, v, a) in einer Analysekomponente (A) erfolgt.

9. Verfahren nach Anspruch 8, wobei Zeitabschnitte (100), in welchen die aufgezeichneten Signale mit niedrigerer Frequenz (f2) aufgezeichnet wurden, mit interpolierten Werten dargestellt werden.

10. Verfahren nach Anspruch 8, wobei Zeitabschnitte (200), in welchen die aufgezeichneten Signale mit niedrigerer Frequenz (f2) aufgezeichnet wurden, ausgeblendet werden.

11. Aufzeichnungskomponente (T) zum Aufzeichnen von Bewegungsabläufen von Bewegungen mittels mindestens einer Achse (A1, A2), ausgestaltet zum:
- Empfangen einer durch eine Bewegungssteuerung (C) zur Laufzeit ermittelten Ereignisphase (P1, P2, P3) des Bewegungsablaufs,
- Aufzeichnen analoger Signale der Bewegung an oder mittels zumindest einer der mindestens einen Achse (A1, A2) mit einer an die Ereignisphase (P1, P2, P3) angepassten Frequenz (f1, f2) abhängig von der ausgegebenen Ereignisphase (P1, P2, P3),
- Bereitstellen der aufgezeichneten analogen Signale zur Analyse der Bewegung.

12. Aufzeichnungskomponente (T) nach Anspruch 11, ferner aufweisend eine Analysekomponente (A) mit einer Darstellungskomponente (V) zur graphischen Darstellung (D) der aufgezeichneten analogen Signale.

13. Bewegungssteuerung (C) mit einer Aufzeichnungskomponente (T) nach einem der Ansprüche 11 oder 12.

14. Computerprogramm, umfassend Befehle, die bei der Ausführung des Programms durch einen Computer diesen veranlassen, das Verfahren nach einem der Ansprüche 1 bis 10 auszuführen.
